# EUROPÄISCHE PATENTANMELDUNG

(11) **EP 4 817 819 A1**
(43) Veröffentlichungstag der Anmeldung: **07.10.2026**
(21) Anmeldenummer: 26169935.9
(22) Anmeldetag: 31.03.2026
(51) Int. Cl.: B25J 15/06, B25J 15/00

(54) **VORRICHTUNG ZUM HALTEN EINES OBJEKTES**

(30) Priorität: 03.04.2025 DE 102025113146
(71) Anmelder: Formhand Automation GmbH, 38116 Braunschweig (DE)
(72) Erfinder: Kunz, Holger, 38116 Braunschweig (DE)
(74) Vertreter: Gramm, Lins & Partner Patent- und Rechtsanwälte PartGmbB

(57) **Zusammenfassung**

Die Erfindung betrifft eine Vorrichtung zum Halten eines Objektes, wobei die Vorrichtung ein ringförmiges Formkissen (2) aufweist, das
- ein Granulat (4) enthält und
- einen nach zumindest einer Seite offenen Ansaugraum (6) umgibt,

wobei das Formkissen (2) und der Ansaugraum (6) einen Anschluss (12, 26) für eine Unterdruckquelle aufweisen,
die **dadurch gekennzeichnet, dass**
der Ansaugraum (6) an der offenen Seite durch eine luftdurchlässige Abdeckung (40) abgedeckt ist.

## Beschreibung

Die Erfindung betrifft eine Vorrichtung zum Halten eines Objektes, wobei die Vorrichtung ein ringförmiges Formkissen aufweist, das ein Granulat enthält und einen nach zumindest einer Seite offenen Ansaugraum umgibt, wobei das Formkissen und der Ansaugraum einen Anschluss für eine Unterdruckquelle aufweisen.

Derartige Vorrichtungen sind aus dem Stand der Technik bekannt und werden verwendet, um Objekte zu halten, zu handhaben und/oder zu transportieren. Soll ein Objekt durch die Vorrichtung gehalten werden, wird das Formkissen mit dem Objekt in Kontakt gebracht. Das Formkissen ist aus einem flexiblen und/oder elastischen Material hergestellt und verformt sich daher unter dem Druck, der von dem Objekt auf das Formkissen ausgeübt wird. Dadurch wird das Granulat, das sich in dem Formkissen befindet, bewegt. Anschließend wird das Formkissen mit Unterdruck beaufschlagt. Der Unterdruck stammt dabei aus einer Unterdruckquelle, beispielsweise eine Pumpe, die Teil der Vorrichtung sein kann, aber nicht Teil der Vorrichtung sein muss. Oft werden derartige Vorrichtungen in Fertigungshallen als Endeffektor von Robotern eingesetzt, die an eine zentrale Unterdruckversorgung angeschlossen sein können oder selbst eine Pumpe aufweisen. Durch die Beaufschlagung des Formkissens mit dem Unterdruck wird die Luft aus dem Formkissen abgesaugt und das Formkissen verfestigt sich in der Position, die es durch den Kontakt mit dem zu greifenden Werkstück eingenommen hat. Auf diese Weise passt sich die Vorrichtung sehr gut an die äußere Form, Geometrie und/oder Gestalt des Objektes an.

Derartige Vorrichtungen wiesen anfangs ein Formkissen mit einer großflächigen Stirnseite auf, die vorzugsweise vollflächig an dem zu haltenden Objekt angelegt wurde, um das Formkissen zu verformen. Eine Weiterentwicklung derartiger Vorrichtungen weisen ein ringförmiges Formkissen auf. Ein ringförmiges Formkissen kann kreisringförmig ausgebildet sein, auch wenn dies keine zwingende Ausgestaltung ist. Ringförmig bedeutet, dass ein Querschnitt durch das Formkissen eine geschlossene Außenkontur und eine geschlossene Innenkontur aufweist. Die Außenkontur wird beispielsweise von einer Außenwand und die Innenkontur von einer Innenwand gebildet. Zwischen der Innenwand und der Außenwand befindet sich das Volumen, in dem sich das Granulat befindet. Das Formkissen ist an einer Seite an einer Halterung befestigt, die zur Montage der Vorrichtung an einem weiteren Bauteil, beispielsweise einem Roboterarm dient. An der gegenüberliegenden Seite wird das Formkissen durch eine Stirnseite begrenzt. In der Regel ist die Stirnseite dafür vorgesehen, mit dem zu haltenden Objekt in Kontakt zu kommen.

Innerhalb der Innenwand befindet sich der Ansaugraum, der von dem Formkissen umgeben wird und von der Innenwand des Formkissens begrenzt wird. Der Ansaugraum weist einen Anschluss für eine Unterdruckquelle auf. Dieser ist vorzugsweise an der der Halterung der Vorrichtung zugewandten Seite des Ansaugraumes positioniert. An der gegenüberliegenden Seite, die dem zu haltenden Objekt zugewandt ist, ist der Ansaugraum offen ausgebildet.

Beim Halten eines Objektes sorgt der Unterdruck, mit dem das Formkissen beaufschlagt wird, für eine Verfestigung des Formkissens, das dadurch in der an das Objekt angepassten Gestalt bleibt. Der Unterdruck, mit dem der Ansaugraum beaufschlagt wird, übt eine Sogwirkung auf das zu haltende Objekt aus. Diese Kraft hält das zu haltende Objekt an der Vorrichtung.

Die oben beschriebenen Eigenschaften und Merkmale sind dabei nicht nur bei Vorrichtungen aus dem Stand der Technik vorhanden und von Vorteil, sondern sind auch für Vorrichtungen gemäß der Ausführungsbeispiele der vorliegenden Erfindung vorteilhaft.

Nachteilig ist, dass derartige Vorrichtungen insbesondere im Bereich des Ansaugraumes zu Verformungen des zu haltenden Objektes führen können, insbesondere wenn dieses selbst sehr flexibel ist. Dies kann zu dauerhaften Verformungen, beispielsweise Knicken und Bügen, oder sogar zu Beschädigungen an dem Objekt führen.

Der Erfindung liegt daher die Aufgabe zugrunde, eine gattungsgemäße Vorrichtung so weiterzuentwickeln, dass auch flexible Objekte besser geschützt werden.

Die Erfindung löst die gestellte Aufgabe durch eine Vorrichtung mit den Merkmalen des Oberbegriffes des Anspruchs 1, die sich dadurch auszeichnet, dass der Ansaugraum an der offenen Seite durch eine luftdurchlässige Abdeckung abgedeckt ist. Durch eine solche Abdeckung wird die Sogwirkung und damit die Haltekraft, die durch den Unterdruck in dem Ansaugraum auf das Objekt ausgeübt wird, weiterhin auf das Objekt ausgeübt. In diesem Fall wird vorliegend von einem nach einer Seite offenen Ansaugraum gesprochen. Durch die luftdurchlässige Abdeckung wird erreicht, dass auch sehr flexible Objekte nicht oder zumindest nicht mehr so stark wie im Stand der Technik in den Ansaugraum eingesogen werden, so dass es nicht mehr zu den Verformungen und Beschädigungen kommen kann. Vorzugsweise ist die luftdurchlässige Abdeckung aus einem flexiblen, aber inelastischen Material hergestellt. Damit kann sie der sich beim Anpassen verändernden Form des Formkissens folgen.

Vorzugsweise ist die luftdurchlässige Abdeckung aus einem Textil, besonders bevorzugt aus einem Gewebe, hergestellt.

Bevorzugt ist die luftdurchlässige Abdeckung an dem Formkissen angeordnet, insbesondere angeklebt und/oder angeschweißt.

In einer bevorzugten Ausgestaltung weist das Formkissen eine Innenwand, die dem Ansaugraum zugewandt ist, eine Außenwand, die dem Ansaugraum abgewandt ist, und eine Stirnseite auf, die die Innenwand mit der Außenwand verbindet, wobei die luftdurchlässige Abdeckung an einer Kante zwischen der Innenwand und der Stirnseite angeordnet ist.

Vorzugsweise beinhaltet die luftdurchlässige Abdeckung wenigstens einen Stabilisierungsstreifen, der eine höhere Steifigkeit, insbesondere Biegesteifigkeit, aufweist als der übrige Teil der luftdurchlässigen Abdeckung. Besonders bevorzugt erstreckt sich wenigstens ein Stabilisierungsstreifen von der Innenwand des Formkissens zur Innenwand des Formkissens.

Es hat sich als vorteilhaft herausgestellt, wenn das Formkissen und der Ansaugraum getrennt voneinander mit Unterdruck beaufschlagbar sind.

Vorzugsweise weisen das Formkissen und der Ansaugraum einen gemeinsamen Anschluss für eine Unterdruckquelle auf, wobei die Vorrichtung bevorzugt ein Ventil aufweist, durch das der Unterdruck auf das Formkissen und/oder den Ansaugraum verteilbar ist. Die Vorrichtung verfügt dann über einen einzigen Anschluss, an dem eine Unterdruckquelle angeordnet werden kann, und über den sowohl das Formkissen als auch der Ansaugraum mit dem Unterdruck beaufschlagt werden kann, wenn eine Unterdruckquelle an den Anschluss angeschlossen ist. Von dem Anschluss verläuft eine Teilleitung zu dem Formkissen und eine andere Teilleitung zu dem Ansaugraum. Beide Teilleitungen sind Teile der gemeinsamen Leitung, die an dem Anschluss beginnt. An der Abzweigung ist vorzugsweise das Ventil angeordnet. Das Ventil ist vorzugsweise eingerichtet, nur das Formkissen oder nur den Ansaugraum mit dem Unterdruck zu versorgen. Zusätzlich ist das Ventil vorzugsweise eingerichtet, sowohl das Formkissen als auch den Ansaugraum mit dem Unterdruck zu versorgen, wobei das Ventil besonders bevorzugt in der Lage ist, das Formkissen und den Ansaugraum unterschiedlich stark mit dem Unterdruck zu versorgen. Dies kann beispielsweise erreicht werden, indem das Ventil den Strömungswiderstand in der zum Formkissen führenden Teilleitung und den Strömungswiderstand in der zum Ansaugraum führenden Teilleitung zu verändern. Dies kann beispielsweise durch ein oder mehrere Drosselventile erreicht werden.

Ein Verfahren zum Halten eines Objektes, bei dem eine Vorrichtung gemäß einem Ausführungsbeispiel der vorliegenden Erfindung verwendet wird, stellt eine eigene Erfindung dar. Dabei wird zunächst das Formkissen an die Geometrie, die äußere Form und/oder die Gestalt des zu haltenden Objektes angepasst. Dies geschieht vorzugsweise, indem das Formkissen mit dem Objekt in Kontakt gebracht wird, Das Formkissen ist dabei noch nicht mit Unterdruck beaufschlagt. Es ist flexibel und verformbar und passt sich daher an das Objekt an.

In diesem Zustand wird der Ansaugraum mit Unterdruck beaufschlagt. Dadurch wird bereits in diesem frühen Stadium eine Haltekraft auf das Objekt ausgeübt, die zudem dazu führen kann, dass das Formkissen sich weiter an die Form, die Geometrie und/oder die Gestalt des Objektes anpasst.

Nach diesem Verformen des Formkissens wird das Formkissen mit dem Unterdruck beaufschlagt. Dadurch verliert das Formkissen wie oben bereits ausgeführt seine Flexibilität und wird in der eingenommenen Form fixiert. Dadurch, dass der Ansaugraum bereits mit dem Unterdruck beaufschlagt ist, wird zudem verhindert, dass das Formkissen beim Verfestigen relativ zu dem Objekt bewegt wird.

Das Lösen des Objektes von der Vorrichtung verläuft vorzugsweise umgekehrt. Nachdem das Objekt lange genug gehalten wurde, wird zunächst der Ansaugraum nicht mehr mit dem Unterdruck beaufschlagt. Dazu kann es ausreichend sein, ein Ventil in der Leitung, durch die ein von außen angelegter Unterdruck zu dem Ansaugraum geleitet wird, zu schließen. Alternativ dazu kann der Ansaugraum auch belüftet werden, indem beispielsweise eine Verbindung zwischen dem Ansaugraum und der Umgebung geöffnet wird. Es kommt dann zum Druckausgleich und die von dem Unterdruck im Ansaugraum erzeugte Haltekraft auf das Objekt kann nicht aufrecht erhalten bleiben. Vorzugsweise wird erst danach, zumindest aber zeitversetzt dazu das Formkissen nicht mehr mit Unterdruck beaufschlagt oder sogar belüftet.

Vorzugsweise ist an dem Formkissen eine ringförmige Dichtlippe angeordnet ist.

Dieser Ausgestaltung liegt die Erkenntnis zugrunde, dass der hohe Energiebedarf der Vorrichtungen aus dem Stand der Technik dadurch zumindest mit verursacht wird, dass der Kontakt zwischen dem Formkissen und dem zu haltenden Objekt nicht ausreichend abgedichtet ist, obwohl das Formkissen nahezu optimal an die Kontur, Form und Gestalt angepasst ist, wenn es mit dem Unterdruck beaufschlagt ist. Durch diese unzureichende Dichtheit strömt Luft in den mit dem Unterdruck beaufschlagten Ansaugraum, so dass es dort zu einem Druckabfall kommt. Ein solcher Druckabfall bedeutet, dass die Druckdifferenz zwischen dem Unterdruck, der durch eine Unterdruckquelle bereitgestellt wird, und dem Umgebungsdruck abnimmt. Der Unterdruck innerhalb des Ansaugraumes wird also weniger stark, der Druck innerhalb des Ansaugraumes steigt. Diese Leckage wird durch die erfindungsgemäße Dichtlippe verringert oder sogar vollständig vermieden, so dass die zum Halten des Objektes benötigte Druckdifferenz zwischen dem Druck im Ansaugraum und dem Umgebungsdruck leichter und damit mit weniger Energieaufwand aufrechterhalten werden kann.

Die Dichtlippe ist ringförmig ausgebildet. Dies kann kreisringförmig bedeuten, zwingend ist dies jedoch nicht. Jede geschlossene Kontur oder Bahn, entlang der die Dichtlippe verläuft, wird im Sinne der vorliegenden Erfindung als ringförmig angesehen.

Vorzugsweise weist das Formkissen eine Innenwand, die dem Ansaugraum zugewandt ist, eine Außenwand, die dem Ansaugraum abgewandt ist, und eine Stirnseite auf, die die Innenwand mit der Außenwand verbindet, wobei die Dichtlippe an der Stirnseite angeordnet ist. Die Stirnseite ist in der Regel dem zu haltenden Objekt zugewandt. Vorzugsweise verläuft die ringförmige Dichtlippe um die Öffnung zum Ansaugraum herum.

In einer bevorzugten Ausgestaltung ist die Dichtlippe einstückig mit dem Formkissen ausgebildet. Das Formkissen mit der Dichtlippe kann beispielsweise gegossen werden, wobei in der Gussform sowohl die Gestalt des Formkissens als auch die der Dichtlippe vorhanden ist und ausgegossen wird.

Alternativ dazu kann die Dichtlippe auch an dem Formkissen befestigt, beispielsweise angeklebt, angeschweißt oder auf sonstige Weise befestigt sein. Dabei ist es von Vorteil, wenn die Verbindung zwischen der Dichtlippe und dem Formkissen entlang des gesamten Verlaufes der Dichtlippe möglichst dicht ist, um die oben beschriebenen Leckagen zu vermeiden.

Die Stirnseite des Formkissens hat die Form eines Ringes. Dabei kann es sich um einen Kreisring handeln. Notwendig ist dies nicht. Wichtig ist, dass die Stirnseite eine Öffnung bildet, die den Zugang zum Ansaugraum bildet. Der durch die Stirnseite gebildete Ring weist eine Breite auf, die dem Abstand zwischen der Innenwand und der Außenwand entspricht. Vorzugsweise ist diese Breite über den Umfang konstant. Die Stirnseite weist einen radial inneren Teil und einen radial äußeren Teil auf. Der radial innere Teil ist vorzugsweise die radial innere Hälfte, das radial innere Drittel oder das radial innere Viertel der Stirnfläche. Der radial innere Teil der Stirnfläche ist der an die Kante zur Innenwand angrenzende Teil der Stirnfläche. Der radial äußere Teil ist vorzugweise die radial äußere Hälfte, das radial äußere Drittel oder das radial äußere Viertel der Stirnfläche. Der radial äußere Teil der Stirnfläche ist der an die Kante zur Außenwand angrenzende Teil der Stirnfläche.

Vorzugsweise ist die Dichtlippe in einem radial inneren Teil der Stirnseite angeordnet. Dies hat den Vorteil, dass die Dichtlippe nahe an dem mit dem Unterdruck beaufschlagten Ansaugraum angeordnet ist, den es gegen die Umgebung abzudichten gilt. Zudem kann durch diese Anordnung eine relativ lange Dichtlippe verwendet werden, ohne dass diese nach radial außen über das Formkissen hervorsteht.

In einer bevorzugten Ausgestaltung ragt die Dichtlippe nicht nach radial außen über das Formkissen hinaus.

Vorzugsweise weist die Dichtlippe einen ersten Abschnitt auf, in dem sie von dem Formkissen weg gekrümmt ist. Sie weist zudem einen zweiten Abschnitt auf, in dem sie zu dem Formkissen hin gekrümmt ist. Sie kann auf diese Weise als Abstandshalter zwischen der Stirnseite des Formkissens und dem zu haltenden Objekt dienen, so dass die Dichtlippe mit dem Unterdruck, mit dem der Ansaugraum beaufschlagt wird, ebenfalls beaufschlagt wird.

Mithilfe der beigefügten Figuren werden nachfolgend einige Ausführungsformen einer Vorrichtung zum Halten eines Objektes näher erläutert. Es zeigen:
Figur 1 - eine schematische Schnittdarstellung durch eine solche Vorrichtung gemäß einem ersten Ausführungsbeispiel,
Figur 2 - eine schematische Schnittdarstellung der Vorrichtung aus Figur 1 im Kontakt mit einem Objekt,
Figur 3 - eine schematische Schnittdarstellung durch eine solche Vorrichtung gemäß einem zweiten Ausführungsbeispiel,
Figur 4 - eine schematische Schnittdarstellung durch eine solche Vorrichtung gemäß einem dritten Ausführungsbeispiel,
Figur 5 - eine schematische Schnittdarstellung der Vorrichtung aus Figur 4 im Kontakt mit einem Objekt und
Figur 6 - eine schematische Schnittdarstellung durch eine solche Vorrichtung gemäß einem vierten Ausführungsbeispiel.

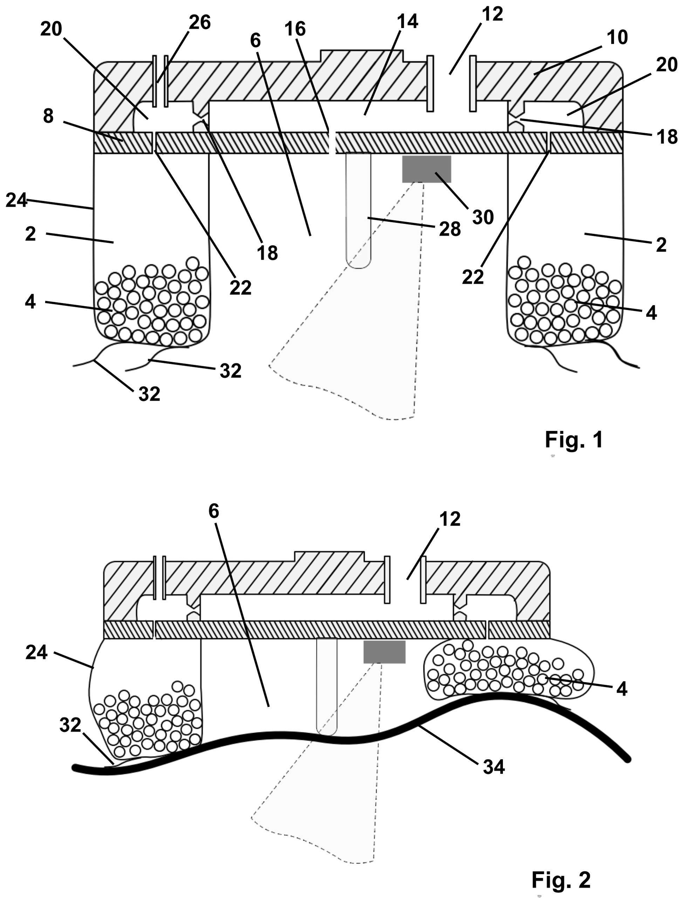

Figur 1 zeigt eine schematische Schnittdarstellung durch eine Vorrichtung zum Halten eines Objektes. Die Vorrichtung weist ein ringförmiges Formkissen 2 auf, das ein Granulat 4 enthält. Das Formkissen 2 umgibt einen ringförmigen Ansaugraum 6, der in Figur 1 nach unten offen ist. Das Formkissen 2 ist mittels eines Verbindungselementes 8 an einem Anschlussstück 10 befestigt. Das Anschlussstück 10 ist beispielsweise an einem nicht dargestellten Arm eines Roboters angeordnet. An dem Anschlussstück 10 weist die Vorrichtung einen Anschluss 12 für eine Unterdruckquelle auf, durch den Luft aus einem Zwischenraum 14 zwischen dem Anschlussstück 10 und dem Verbindungselement 8 gesaugt werden kann, wenn der Anschluss 12 mit einer Unterdruckquelle verbunden wird. Das Verbindungselement 8 weist einen Durchlass 16 auf, der den Zwischenraum 14 mit dem Ansaugraum 6 verbindet. Wird also mittels einer an dem Anschluss 12 angeschlossenen Unterdruckquelle, beispielsweise eine Pumpe, ein Unterdruck an den Anschluss 12 angelegt, wird Luft aus dem Zwischenraum 14 und durch den Durchlass 16 auch aus dem Ansaugraum 6 abgesaugt.

Das Anschlussstück 10 verfügt im gezeigten Ausführungsbeispiel über zwei Ventile 18 auf, durch die der Zwischenraum 14 mit einem ringförmigen Nebenraum 20 verbunden ist, wenn die Ventile 18 geöffnet sind. Das Verbindungselement 8 verfügt über zwei weitere Durchgänge 22, durch die der Nebenraum 20 mit dem Formkissen 2 verbunden ist. Bei geöffneten Ventilen 18 wird also durch eine an dem Anschluss 12 angeordneten Unterdruckquelle auch Luft aus dem Formkissen 2 abgesaugt, das Granulat 4 fest von der Hülle 24 des Formkissens 2 umschlossen ist. Das Anschlussstück verfügt zudem über einen zweiten Anschluss 26, der mit einer Unterdruckquelle verbindbar ist. So ist es möglich, bei geschlossenen Ventilen 18 das Formkissen 2 und den Ansaugraum 6 mit unterschiedlichen Unterdrücken zu beaufschlagen.

Im Ansaugraum 6 befinden sich zudem ein Anschlag 28 und ein Sensor 30, mit denen eine Annäherung an ein zu haltendes Objekt überwacht werden kann. An der in Figur 1 unten dargestellten Seite der Hülle 24 sind zwei Dichtlippen 32 angeordnet. Damit wird ein Kontaktbereich zwischen der Hülle 24 des Formkissens 2 und einem zu haltenden Objekt abgedichtet. Dadurch wird es einfacher möglich, innerhalb des Ansaugraumes 6 einen Unterdruck aufrecht zu erhalten, der eine Saugkraft auf das zu haltende Objekt ausübt.

Figur 2 zeigt die Situation, in der die Vorrichtung aus Figur 1 mit einem Objekt 34 in Kontakt kommt. Man erkennt, dass die Dichtlippen 32 an dem Objekt 34 anliegen. Durch einen Unterdruck, der innerhalb des Ansaugraumes 6 erzeugt wird, wird das Objekt 34 an das Formkissen 2 angesaugt. Ein in dem Formkissen erzeugter Unterdruck sorgt dafür, dass die Hülle 24 des Formkissens sich eng an das Granulat 4 anlegt und so verhindert, dass sich die einzelnen Elemente des Granulates 4 relativ zueinander bewegen können.

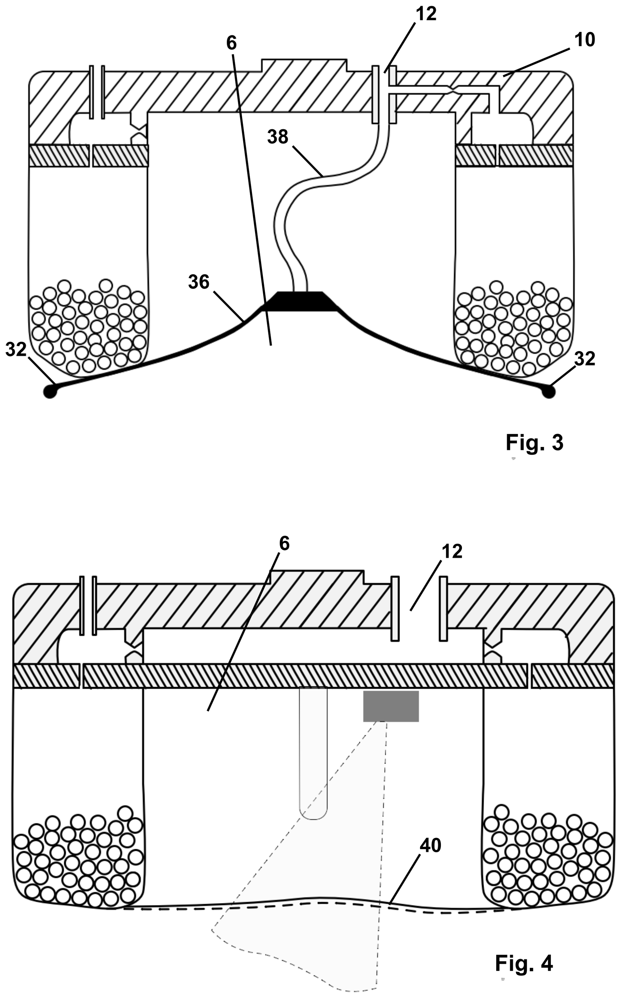

Figur 3 zeigt eine schematische Schnittdarstellung durch eine Vorrichtung gemäß einem zweiten Ausführungsbeispiel. Die Dichtlippe 32 weist eine Verdickung am Ende auf, wodurch die Dichteigenschaften verbessert werden. Die Dichtlippe 32 ist Teil eines zentralen Dichtelementes 36, das anstelle des zentralen Anteils des Verbindungselementes 8 den Ansaugraum 6 in Richtung des Anschlussstückes 10 begrenzt. Der Anschluss 12 ist über eine Leitung 38 mit dem Ansaugraum 6 verbunden.

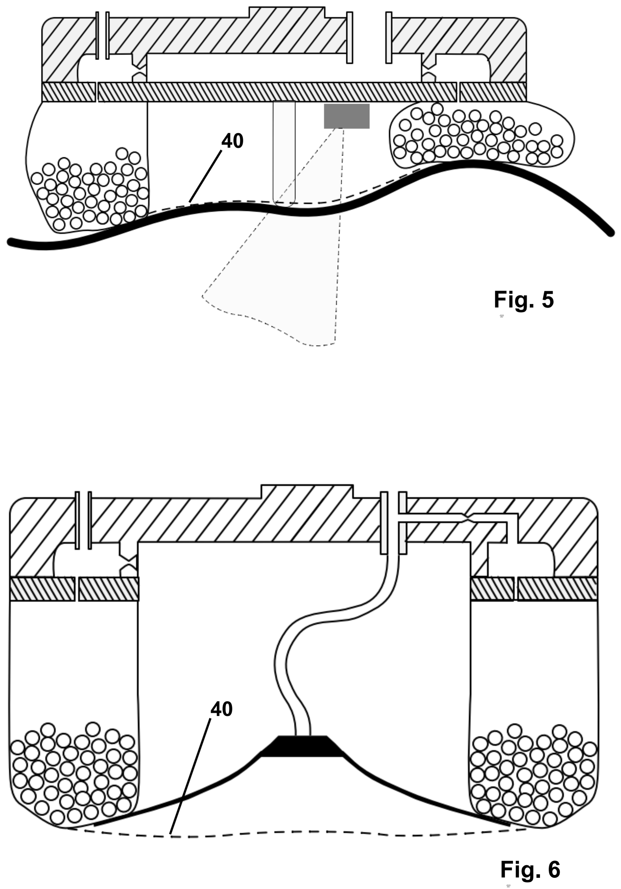

Die in Figur 4 in einer schematischen Schnittdarstellung gezeigte dritte Ausführungsform einer Vorrichtung zum Halten eines Objektes entspricht im Wesentlich der Darstellung in Figur 1. Die in Figur 4 dargestellte Vorrichtung weist jedoch keine Dichtlippen 32 auf. Sie verfügt über eine Abdeckung 40, die luftdurchlässig ausgebildet ist und den Ansaugraum 6 nach unten, also in Richtung auf ein zu haltendes Objekt begrenzt. Da die Abdeckung 40 luftdurchlässig ist, wird ein in dem Ansaugraum erzeugter Unterdruck, der durch eine an dem Anschluss 12 angeordnete nicht dargestellte Unterdruckquelle erzeugt wird, eine Haltkraft auf das Objekt ausüben. Die Darstellungen der Figuren 5 und 6 entsprechen denen der Figuren 2 und 3. Die in den Figuren 5 und 6 dargestellten Ausgestaltungen der Vorrichtung weisen jedoch keine Dichtlippen 32 auf. Sie verfügen jeweils über eine luftdurchlässige Abdeckung.

### Bezugszeichenliste

2 Formkissen
4 Granulat
6 Ansaugraum
8 Verbindungselement
10 Anschlussstück
12 Anschluss
14 Zwischenraum
16 Durchlass
18 Ventil
20 Nebenraum
22 Durchgang
24 Hülle
26 zweiter Anschluss
28 Anschlag
30 Sensor
32 Dichtlippe
34 Objekt
36 Dichtelement
38 Leitung
40 Abdeckung

## Patentansprüche

1. Vorrichtung zum Halten eines Objektes, wobei die Vorrichtung ein ringförmiges Formkissen (2) aufweist, das
- ein Granulat (4) enthält und
- einen nach zumindest einer Seite offenen Ansaugraum (6) umgibt,
wobei das Formkissen (2) und der Ansaugraum (6) einen Anschluss (12, 26) für eine Unterdruckquelle aufweisen,
**dadurch gekennzeichnet, dass**
der Ansaugraum (6) an der offenen Seite durch eine luftdurchlässige Abdeckung (40) abgedeckt ist.

2. Vorrichtung nach Anspruch 1, **dadurch gekennzeichnet, dass** die luftdurchlässige Abdeckung (40) aus einem Textil hergestellt ist.

3. Vorrichtung nach Anspruch 1 oder 2, **dadurch gekennzeichnet, dass** die luftdurchlässige Abdeckung (40) an dem Formkissen (2) angeordnet, insbesondere angeklebt und/oder angeschweißt ist.

4. Vorrichtung nach Anspruch 3, **dadurch gekennzeichnet, dass** das Formkissen (2) eine Innenwand, die dem Ansaugraum (6) zugewandt ist, eine Außenwand, die dem Ansaugraum (6) abgewandt ist, und eine Stirnseite aufweist, die die Innenwand mit der Außenwand verbindet, wobei die luftdurchlässige Abdeckung (40) an einer Kante zwischen der Innenwand und der Stirnseite angeordnet ist.

5. Vorrichtung nach einem der vorstehenden Ansprüche, **dadurch gekennzeichnet, dass** die luftdurchlässige Abdeckung (40) wenigstens einen Stabilisierungsstreifen beinhaltet, der eine höhere Steifigkeit, insbesondere Biegesteifigkeit, aufweist als der übrige Teil der luftdurchlässigen Abdeckung (40).

6. Vorrichtung nach Anspruch 5, **dadurch gekennzeichnet, dass** sich wenigstens ein Stabilisierungsstreifen von der Innenwand des Formkissens (2) zur Innenwand des Formkissens (2) erstreckt.

7. Vorrichtung nach einem der vorstehenden Ansprüche, **dadurch gekennzeichnet, dass** das Formkissen (2) und der Ansaugraum (6) getrennt voneinander mit Unterdruck beaufschlagbar sind.

8. Vorrichtung nach einem der vorstehenden Ansprüche, **dadurch gekennzeichnet, dass** das Formkissen (2) und der Ansaugraum (6) einen gemeinsamen Anschluss (12) für eine Unterdruckquelle aufweisen, wobei die Vorrichtung bevorzugt ein Ventil (18) aufweist, durch das der Unterdruck auf das Formkissen (2) und/oder den Ansaugraum (6) verteilbar ist.
